Europäisches Patentamt

(19) European Patent Office

Office européen des brevets

(11) Publication number: **0 091 786**
**B1**

(12) **EUROPEAN PATENT SPECIFICATION**

(45) Date of publication of patent specification: **05.11.86**

(51) Int. Cl.⁴: **F 02 K 1/12**

(21) Application number: **83301949.0**

(22) Date of filing: **07.04.83**

(54) **Variable geometry nozzles for turbomachines.**

(30) Priority: **07.04.82 US 376389**

(43) Date of publication of application:
**19.10.83 Bulletin 83/42**

(45) Publication of the grant of the patent:
**05.11.86 Bulletin 86/45**

(84) Designated Contracting States:
**DE FR GB IT SE**

(56) References cited:
**FR-A-1 329 959**
**GB-A- 796 093**
**GB-A- 833 250**
**US-A-3 024 600**
**US-A-3 403 858**
**US-A-4 245 787**

(73) Proprietor: **ROLLS-ROYCE plc**
**65 Buckingham Gate**
**London, SW1E 6AT (GB)**

(72) Inventor: **Jones, Thomas John**
**71 Mackie Road**
**Filton Bristol (GB)**
Inventor: **Szuminski, Gary Frank**
**448 Springs End Lane**
**Marietta Georgia 30067 (US)**

(74) Representative: **Leaman, Keith**
**Rolls-Royce Limited P.O. Box 3 Filton**
**Bristol BS12 7QE (GB)**

Courier Press, Leamington Spa, England.

## Description

This invention relates to variable area nozzles for turbomachines and is particularly, although not exclusively, concerned with nozzles that can be swivelled to vary the direction of thrust produced by the turbomachines.

Afterburning or reheat is a method of augmenting the basic thrust of a gas turbine engine and comprises the introduction and burning of additional fuel between the engine turbine and the jet pipe nozzle utilising the unburnt oxygen in the exhaust gases to support the combustion.

Also, with engines such as the Rolls-Royce Limited's Pegasus engine in which cold by-pass air is discharged from vectorable "cold" nozzles, it is known to burn additional fuel in the air stream supplied to the nozzles to increase thrust. This is commonly referred to as plenum chamber burning (P.C.B.).

In both reheat and P.C.B. modes of operation, it is necessary to be able to increase the outlet area of the respective nozzle, to give an area suitable for the resultant increase in the volume of the gas stream to prevent any increase in pressure occurring that would otherwise affect the efficient functioning of the engine. The actual area of the nozzle is dictated by many factors which affect the mass flow of air through the engine, such as for example, altitude, ambient temperature, forward speed of the aircraft, and speed of the engine.

With nozzles that are swivellable, the mechanism for varying the area of the outlet must be simple to operate, capable of being operated independently of the mechanism for swivelling the nozzle, robust, and lightweight so as not to impose unacceptable loads on the mechanism for supporting and swivelling the nozzle.

One nozzle design which meets the above mentioned requirements, at least in part, is disclosed in GB—A—833,250 in which an exhaust nozzle for a gas turbine engine comprises a duct extending along an axis and has, at a downstream end thereof, a mechanism for varying the geometry and area of the nozzle. The mechanism comprises an axially translatable member, a plurality of first flaps spaced circumferentially around the axis of the duct each of which is pivotally attached at its upstream end to the axially translatable member, each first flap being provided with a cam plate that co-operates with a wheel that is fixed relative to the fixed duct thereby to define the attitude of each first flap relative to the member, a plurality of first seal plates each of which is attached at an upstream end to first flaps and positioned to cover the gap between adjacent first flaps, a set of circumferentially spaced second flaps each of which is pivotally attached at its upstream end to the downstream end of a first flap, and a plurality of third flaps each of which is pivotally attached at one end to the member and pivotally attached at its other end to the downstream end of one of the second flaps.

The invention, disclosed in this prior patent, whilst providing an adequate nozzle, suffers from one major disadvantage in that the total force exerted on the flaps is experienced by the actuation mechanism. This results in the actuation mechanism being considerably more heavy and complex than desired and results in a loss of performance.

A similar nozzle to that described above is disclosed in US—A—4,245,787. This nozzle suffers from the same disadvantages.

It is an object of the present invention to provide a variable area nozzle for a turbomachine which is simple to operate, robust, lightweight and which reduces and possibly eliminates the disadvantages of the above mentioned inventions.

According to the present invention, there is provided an exhaust nozzle for a gas turbine engine comprising a duct extending along an axis and having at a downstream end thereof a mechanism for varying the geometry and area of the nozzle, the mechanism comprising an axially translatable member, a plurality of first flaps spaced circumferentially around the axis of the duct each of which is pivotally attached at its upstream end to the axially translatable member, a plurality of first seal plates each of which is positioned to cover the gap between adjacent first flaps, a set of circumferentially spaced second flaps each of which is pivotally attached at its upstream end to the downstream end of a first flap, and a plurality of third flaps each of which is pivotally attached at one end to the member and pivotally attached at its other end to the downstream end of one of the second flaps, characterised in that, the axially translatable member has a face extending in a direction transverse to the axis of the duct against which pressurised gases flowing through the duct act to bias the member in a direction along the duct; each first flap is provided with a cam follower that cooperates with a cam that is fixed relative to the duct thereby to define the attitude of each first flap relative to the member; each first seal plate is pivotally attached at an upstream end to the member; there are provided a plurality of second seal plates each of which is pivotally attached at an upstream end to the downstream end of one of the first seal plates and positioned to cover the gap between two adjacent second flaps; and there are further provided a plurality of struts each of which is slidably and pivotally connected at one end to the member and pivotally connected at another end to a second flap at a region of the second flap downstream of the pivotal attachment of the second flap to the first flap.

The invention will now be more particularly described, by way of example only, with reference to the accompanying drawings in which:

Figure 1 illustrates schematically a gas turbine aero-engine incorporating three vectorable nozzles. For convenience only one of the nozzles is shown constructed in accordance with the present invention.

Figure 2 illustrates in more detail a sectional elevation of part of the rear nozzle of the engine shown in Figure 1, and,

Figure 3 is a cross-sectional view of nozzle in the direction of arrows A—A in Figure 2.

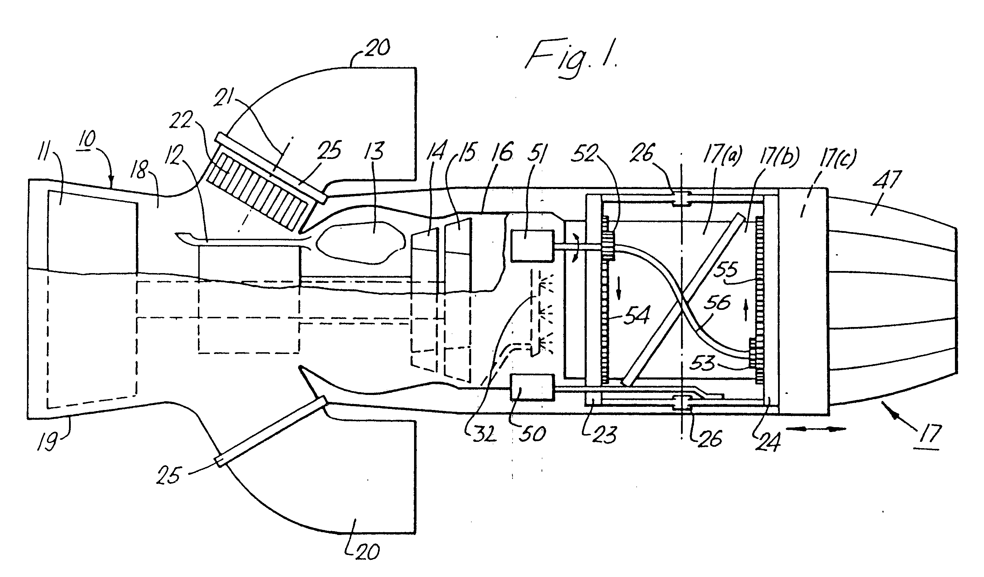

Referring to Figure 1 there is shown schematically a gas turbine aero engine 10 of the by-pass type. The engine comprises in flow series, an axial flow low pressure compressor 11; an axial flow high pressure compressor 12, a combustion chamber 13, a high pressure turbine 14 which drives the H.P. compressor 12, a low pressure turbine 15 which drives the L.P. compressor 11, and a jet pipe 16 terminating in a vectorable variable area nozzle 17.

The L.P. compressor 11 supplies compressed air to the H.P. compressor 12 and to a plenum chamber 18 which forms part of the by-pass duct 19 and which terminates in two vectorable nozzles 20. The nozzles 20 are mounted in bearings 25 for rotation through an angle of approximately 110° about an axis 21.

Additional combustion equipment 22 is provided in the plenum chamber 18 so that additional fuel can be burnt in the air stream ejected through the nozzles 20 to increase the thrust. To enable the engine to run efficiently the nozzles 17 and 20 are provided with variable-area, variable-geometry outlets and are constructed in accordance with the present invention.

For convenience the invention will be more particularly described with reference to nozzle 17 but it is to be understood that the mechanism for varying the area and geometry is similar for all the nozzles 17 and 20, and may also be used with nozzles for fixed jet pipes.

The nozzle 17 is of the type in which a scarfed rotatable duct 17(a) is mounted in bearings 23 on the downstream end of the jet pipe 16, and a second scarfed duct 17(b) is mounted in bearings 24 for rotation in the opposite direction to that of duct 17(a). The bearing 24 is, in turn, rotatable bodily on trunnions 26 which extend transverse to the axis of duct 17(b). This type of nozzle is described in more detail in co-pending European Patent Application EP—A—0 092 345 entitled Vectorable Nozzles For Turbomachines naming the present inventors and assigned jointly to Rolls-Royce Incorporated and Rolls-Royce Limited. In operation the bearing 24 is rotated about the axis of the trunnions 26 by means of a screw jack (shown schematically by the numeral 50) which pushes on the brackets that support the bearing 24 in the trunnions 26. As the bearing 24 is swung about the axis of the trunnions 26 the ducts 17(a) and 17(b) are rotated in opposite directions by means of a motor 51 and sprockets 52, 53, chain drives 54, 55 and flexible drive shaft 56 is explained in the above-mentioned European patent application.

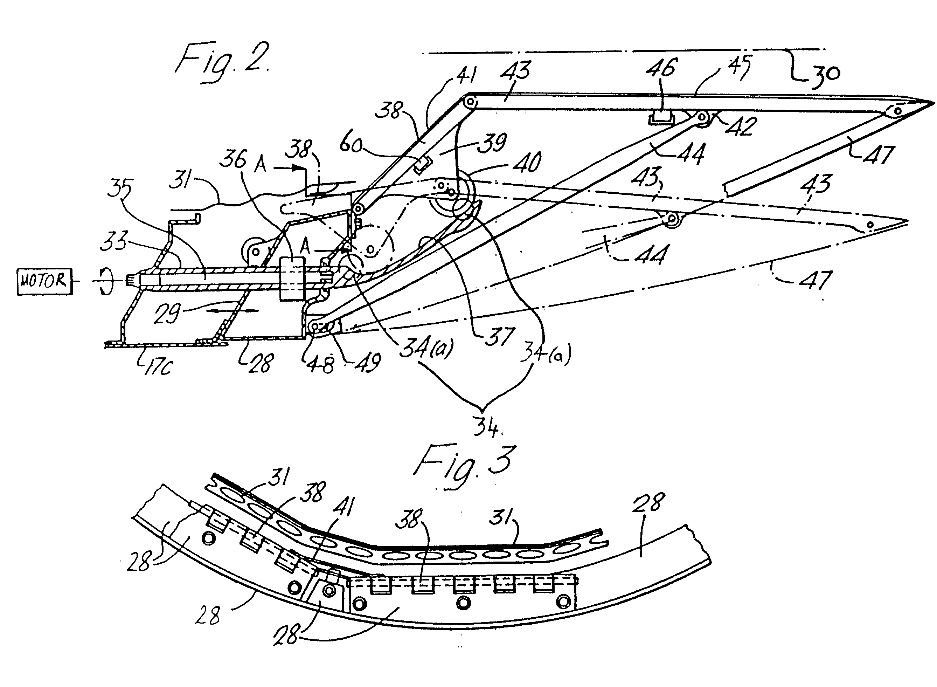

The nozzle 17 has at its downstream end a duct 17(c) which is carried by the fixed race of the bearing 24. It is this duct 17(c) that is provided with the mechanism for varying the geometry and area of the outlet of the nozzle 17 in accordance with the present invention, as shown in Figures 2 and 3.

Referring to Figures 2 and 3, the mechanism for varying the geometry and area of the outlet nozzle comprises an annular member 28 which is translatable axially and on which are carried three sets of flaps as will be described below. The member 28 is mounted to slide axially inside the downstream end of duct 17(c) and the member 28 comprises an annular hollow box structure which has a face 29 extending in a direction transverse to the axis 30 of the duct 17(c). Pressurised gas flowing through duct 17(c) acts on face 29 to urge the member 28 rearwards.

The member 28 slides inside the bore of duct 17(c) and a heat shield liner 31 is provided to protect the duct 17(c) and the member 28 from the hot gases flowing through the nozzle when the reheat combustor 32 in the jet pipe is ignited.

The member 28 is supported on axially extending tubes 33 which carry an annular cam-ring assembly 34.

Located in at least some of the tubes 33 is a lead screw 35 of a screwjack which engages a nut 36 (of the recirculating ball type) fixed to the member 28. Rotation of the lead screws 35 by a motor drive through gearboxes pushes and pulls the member 28 to-and-fro in the axial direction.

The cam ring assembly 34 comprises two polygonal frameworks of tubes 34(a) interconnected by a plurality of cams 37 facing inwards (only one of which is shown). The cams 37 are equispaced around the axis 30.

Each first primary flap 38 is pivotally attached at its upstream end to the downstream inner circumferential end of the member 28 and has a web 39 projecting from its outer facing side. The web 39 carries a cam follower 40, in the form of a roller, that engages one of the cams 37 to define and vary the attitude of the flap 38 relative to member 28 as member 28 is moved in an axial direction.

The flaps 38 comprise a hollow structure with spaced walls which are made from a carbon-carbon material such as Pyrocarb (Registered US Trademark material as manufactured by Hitco of USA). Pyrocarb materials comprise a carbon matrix in which is embedded a woven cloth of carbon fibres. The material is protected from oxidation either by overcoating it with a non-oxidising protective layer or by impregnating silicon into it and converting the silicon to silicon carbide.

A second primary flap 43 is pivotally attached at its upstream end to the downstream end of a first primary flap 38. Each flap 43 is a hollow structure of spaced carbon-carbon walls similar to flaps 38, and each flap 43 is provided with a lug 42 partway along its length.

The flaps 38 are spaced apart circumferentially and each of the gaps between the flaps 38 is closed off by a thin seal plate 41 (see Figure 3 which is a section through the hinge between flaps 38 and the member 28). The seal plates 41 are located on the inward-facing side of the flaps 38 and are constrained from falling inwards by means of rollers 60 that engage the outside surface of the flaps 38. The seal plates 41 accommodate different positions of the flaps 38 by sliding circumferentially.

A plurality of struts 44 are pivotally attached at one of their ends to a downstream outer circumference of the member 28. Each of the struts 44 is pivotally connected at its other end to the lug 42 of one of the second flaps 43.

Here again, the second flaps 43 are spaced circumferentially and the gaps between them are closed-off by thin carbon-carbon seal plates 45 that are pivotally attached at their upstream end to the downstream end of the seal plates 41. The seal plates 45 are located on the inward-facing side of the flaps 43 and are constrained from falling inwards by rollers 46 which are mounted on flanges that project through the gaps between flaps 43 to engage the outer surface of the flaps 43. The seal plates 45 allow the flaps 43 to assume different positions where they define a convergent part of the nozzle to where they define a divergent part of the nozzle by sliding relative to the flaps 43. The seal plates 45 do not have lugs 42 and no struts 44 are connected to the seal plates 45.

A set of third flaps 47 made of a carbon fibre reinforced polyimide material are provided on the member 28. Each of the third flaps 47 is pivotally attached at its upstream end to the downstream end of the member 28, and is pivotally attached at its downstream end to the downstream end of one of the second flaps 43. The pivot 48 at the upstream end of the third flaps 47 locates in an elongated hole 49 in the member 28.

The flaps 47 overlap each other to accommodate the different positions of the flaps 47.

In operation of the nozzle with the member 28 in the fully rearwards position shown in solid lines in Figure 2, the flaps 38 define a convergent part of the nozzle and the flaps 43 define a parallel or slightly divergent part of the nozzle with the throat area of the nozzle (in a radial plane of the pivotal connections between the flaps 38 and 43) at a minimum dimension. This configuration would be used for a subsonic dry maximum thrust mode of operation such as for take-off, or subsonic accelerations.

By pulling the member 28 forwards the cam followers 40 move along the dams 37 and the flaps 38 define a parallel or slightly convergent part of the nozzle (as shown with dotted lines) a maximum area throat, and flaps 43 define a divergent part of the nozzle with a maximum exit area at the downstream ends of flaps 43. This configuration would be used for maximum thrust with reheat or P.C.B. mode of operation such as would be required for supersonic cruise flight or accelerations.

The gas loads on the flaps 38 and 43 and seal plates 41 and 45 are transmitted back to the member 28 and exert a net force forwards (i.e. towards the jet pipe 16) on the member 28. Accordingly, by exposing the front face of the member 28 to the pressurised gases flowing through the duct 17(c) the gases exert a rearward force on the member 28 that partly counterbalances the forward loads exerted on the member 28. This in turn reduces the forces required to move the member 28 in axial directions. The area of the front face 29 of the member can be chosen to achieve the optimum rearwards force on the member 28.

Clearly, at intermediate positions between those shown in solid and dotted lines in Figure 2 various combinations of convergence and divergence with different throat areas can be obtained.

As flaps 38 and 43 take up different positions the seal plates 41 and 45 slide to fill up the gaps between the respective flaps 38 and 43. Also, the flaps 47 are moved to alter the boat-tail angle and thereby reduce base drag.

**Claims**

1. An exhaust nozzle (17) for a gas turbine engine (10) comprising a duct (17c) extending along an axis and having at a downstream end thereof, a mechanism for varying the geometry and area of the nozzle (17), the mechanism comprising an axially translatable member (28), a plurality of first flaps (38) spaced circumferentially around the axis of the duct each of which is pivotally attached at its upstream end to the axially translatable member (28), a plurality of first seal plates (41) each of which is positioned to cover the gap between adjacent first flaps (38), a set of circumferentially spaced second flaps (43) each of which is pivotally attached at its upstream end to the downstream end of a first flap (38), and a plurality of third flaps (47) each of which is pivotally attached at one end to the member (28) and pivotally attached at its other end to the downstream end of one of the second flaps (43), characterised in that, the axially translatable member (28) has a face (29) extending in a direction transverse to the axis of the duct (17c) against which pressurised gases flowing through the duct (17c) act to bias the member (28) in a dirction along the duct (17c); each first flap (38) is provided with a cam follower (40) that cooperates with a cam (37) that is fixed relative to the duct (17c) thereby to define the attitude of each first flap (38) relative to the member (28); each first seal plate (41) is pivotally attached at an upstream end to the member (28); there are provided a plurality of second seal plates (45) each of which is pivotally attached at an upstream end to the downstream end of one of the first seal plates (41) and positioned to cover the gap between two adjacent second flaps (43); and there are further provided a plurality of struts (44) each of which is slidably and pivotally connected at one end to the member (28) and pivotally connected at another end to a second flap (43) at a region of the second flap (43) downstream of the pivotal attachment of the second flap (43) to the first flap (38).

2. A nozzle according to claim 1 wherein the axially translatable member (28) is an annular structure which is moved axially by means of one or more lead screws (35) which is rotatable in a nut (36) which is carried by the member (28) and the first flaps (38) and first seal plates (41) are pivotally mounted on an inner circumference of the annular member (28), and the third flaps (47) are pivotally mounted on an outer circumference of the annular member (28).

3. A nozzle according to claim 2 wherein the annular member (28) is mounted to slide axially on axially extending supports (33) and the supports carry an annular framework (34(a)) that defines a plurality of axially extending cam surfaces (37) spaced around the axis of the annular framework.

4. A nozzle according to claim 3 wherein the cam surfaces (37) face inwards and each first flap (38) is provided with the cam follower (40) on its outer facing side.

5. A nozzle according to claim 1 wherein roller means (60) which contact the outward facing sides of the first flaps (38) are provided on each of the first seal plates (41).

6. A nozzle according to claim 1 wherein roller means (46) which contact the outward facing sides of the second flaps (43) are provided on each of the second seal plates (45).

## Revendications

1. Tuyère d'échappement (17) pour turbomachine à gaz (10), comprenant une conduite (17c) s'étendant le long d'un axe et présentant à son extrémité aval un mécanisme pour modifier la géométrie et la section de la tuyère (27), le mécanisme comprenant un organe (28) pouvant effectuer un mouvement de translation axiale, un ensemble de premiers volets (38) espacés circonférentiellement autour de l'axe de la conduite, dont chacun est fixé de façon pivotante par son extrémité amont à l'organe (28) pouvant effectuer un mouvement de translation axiale, un ensemble de premières plaques de fermeture (41) dont chacune est positionnée pour recouvrir l'interstice entre des premiers volets adjacents (38), un jeu de seconds volets (43) espacés circonférentiellement, dont chacun est fixé de façon pivotante par son extrémité amont à l'extrémité aval d'un premier volet (38), et un ensemble de troisièmes volets (47) dont chacun est fixé de façon pivotante par une extrémité à l'organe (28) et est fixé de façon pivotante par son autre extrémité à l'extrémité aval de l'un des seconds volets (43), caractérisée en ce que l'organe (28) qui peut effectuer un mouvement de translation axiale comprend une face (29) s'étendant dans une direction transversale à l'axe de la conduite (17c) et contre laquelle agissent des gaz sous pression qui s'écoulent par la conduite (17c) pour solliciter l'organe (28) dans une direction le long de la conduite (17c); chaque premier volet (38) est muni d'un suiveur de came (40) qui coopère avec une came (37) qui est fixe par rapport à la conduite (17c), pour définir ainsi l'attitude de chaque premier volet (38) par rapport à l'organe (28); chaque première plaque de fermeture (41) est fixée de façon pivotante par une extrémité amont à l'organe (28); un ensemble de secondes plaques de fermeture (45) est prévu, dont chacune est fixée de façon pivotante par une extrémité amont à une extrémité aval de l'une des premières plaques de fermeture (41) et positionnée de manière à recouvrir l'interstice entre deux seconds volets adjacents (43); et un ensemble d'entretoises (44) est en outre prévu, dont chacune est reliée de façon coulissante et pivotante par une extrémité à l'organe (28) et est reliée de façon pivotante par l'autre extrémité à un second volet (43) dans une région du second volet (43) qui est en aval de la fixation pivotante du second volet (43) au premier volet (38).

2. Tuyère selon la revendication 1, caractérisée en ce que l'organe (28) qui peut être déplacé en translation axiale est une structure annulaire qui est déplacée axialement par une ou plusieurs tiges filetées (35) pouvant tourner dans un ou des écrous (36) supportés par l'organe (28), et les premiers volets (38) et les premières plaques de fermeture (41) sont montés de façon pivotante sur une circonférence intérieure de l'organe annulaire (28) et les troisièmes volets (47) sont montés de façon pivotante sur une circonférence extérieure de l'organe annulaire (28).

3. Tuyère selon la revendication 2, caractérisée en ce que l'organe annulaire (28) est monté de manière à coulisser axialement sur des supports (33) s'étendant axialement, et les supports supportent un bâti annulaire (34a) qui définit un ensemble de surfaces de came (37) s'étendant axialement, espacées autour de l'axe du bâti annulaire.

4. Tuyère selon la revendication 3, caractérisée en ce que les surfaces de came (37) font face vers l'intérieur et chaque premier volet (38) est muni d'un suiveur de came (40) sur son côté qui fait face vers l'extérieur.

5. Tuyère selon la revendication 1, caractérisée en ce que des moyens à galets (60) qui sont en contact avec les côtés tournés vers l'extérieur des premiers volets (38) sont prévus sur chacune des premières plaques de fermeture (41).

6. Tuyère selon la revendication 1, caractérisée en ce que les moyens à galets (46) qui sont en contact avec les côtés tournés vers l'extérieur des seconds volets (43) sont prévus sur chacune des secondes plaques de fermeture (45).

## Patentansprüche

1. Abgasdüse (17) für ein Gasturbinentriebwerk (10) mit einem entlang einer Achse verlaufenden Kanal (17c), der an seinem stromabwärtigen Ende einen Mechanismus zum Verändern der Geometrie und des Querschnitts der Düse (17) aufweist, wobei der Mechanismus ein axial verschiebbares Bauteil (28), eine Anzahl erster Klappen (38), die mit gegenseitigen Umfangsabständen um die Achse des Kanals herum angeordnet und jeweils mit ihrem stromaufwärtigen Ende gelenkig an dem axial verschiebbaren Bauteil (28) befestigt sind, eine Anzahl erster Dichtungsplatten (41), die jeweils so angeordnet sind, daß sie den Spalt zwischen benachbarten ersten Klappen (38) überdecken, eine Gruppe von mit gegenseitigen Umfangsabständen angeordneten zweiten Klappen (43), die jeweils mit ihrem stromaufwärtigen Ende gelenkig am stromabwärtigen Ende einer ersten Klappe (38) befestigt sind, und eine Anzahl von dritten Klappen (47) aufweist, die jeweils mit einem Ende gelenkig an dem Bauteil (28) und mit ihrem anderen Ende gelenkig am stromabwärtigen Ende einer der zweiten Klappen (43) befestigt sind, dadurch gekennzeichnet, daß das axial verschiebbare Bauteil (28) eine in einer Querrichtung zur Achse des Kanals (17c) weisende Stirnfläche (29) aufweist, gegen welche unter Druck stehende, durch den Kanal (17c) strömende Gase wirken und das Bauteil (28) in Richtung entlang des Kanals (17c) drängen, daß jede erste Klappe (38) mit einem Profilfolger (14) versehen ist, der mit einem mit Bezug auf den Kanal (17c) feststehenden Profil (37) zusammenwirkt und dadurch die Stellung jeder ersten Klappe (38) relativ zum Bauteil (28) bestimmt, daß jede Dichtungsplatte (41) gelenkig am stromaufwärtigen Ende des Bauteils (28) befestigt ist, daß eine Anzahl zweiter Dichtungsplatten (45) vorgesehen ist, die jeweils mit ihrem stromaufwärtigen Ende gelenkig am stromabwärtigen Ende einer der ersten Dichtungsplatten (41) befestigt und so positioniert sind, daß sie den Spalt zwischen zwei benachbarten zweiten Klappen (43) überdecken, und daß außerdem eine Anzahl von Streben (44) vorgesehen ist, die jeweils mit einem Ende gleitfähig und gelenkig an dem Bauteil (28) und mit dem anderen Ende gelenkig an einer zweiten Klappe (43) in einem stromab der gelenkigen Befestigung der zweiten Klappe (43) an der ersten Klappe (38) gelegenen Bereich der zweiten Klappe (43) befestigt sind.

2. Düse nach Anspruch 1, wobei das axial verschiebbare Bauteil (28) eine ringförmige Konstruktion ist, die mittels einer oder mehrerer Leitspindeln (35) axial bewegt wird, die in einer von dem Bauteil (28) gehaltenen Mutter (36) drehbar ist, und wobei die ersten Klappen (38) und die ersten Dichtungsplatten (41) an einem Innenumfang des ringförmigen Bauteils (28) gelenkig montiert und die dritten Klappen (47) an einem Außenumfang des ringförmigen Bauteils (28) gelenkig montiert sind.

3. Düse nach Anspruch 2, wobei das ringförmige Bauteil (28) so angeordnet ist, daß es auf axial verlaufenden Führungen (33) axial verschiebbar ist, und wobei die Führungen einen ringförmigen Rahmen (43a) tragen, der eine Anzahl axial verlaufender Profilflächen (37) bildet, die mit gegenseitigen Abständen um die Achse des ringförmigen Rahmens herum angeordnet sind.

4. Düse nach Anspruch 3, wobei die Profilflächen (37) einwärts weisen und wobei jede erste Klappe (38) mit dem an ihrer auswärts weisenden Seite angeordneten Profilfolger (40) versehen ist.

5. Düse nach Anspruch 1, wobei an jeder der ersten Dichtungsplatten (41) Rollen (60) angeordnet sind, die mit den nach außen weisenden Seiten der ersten Klappen (38) in Berührung stehen.

6. Düse nach Anspruch 1, wobei an jeder der zweiten Dichtungsplatten (45) Rollen (46) angeordnet sind, die mit den nach außen weisenden Seiten der zweiten Klappen (43) in Berührung stehen.

Fig. 1.

Fig. 2.

Fig. 3